# EUROPEAN PATENT SPECIFICATION

(11) **EP 3 127 803 B1**
(45) Date of publication and mention of the grant of the patent: **01.05.2019**
(21) Application number: 15179673.7
(22) Date of filing: 04.08.2015
(51) Int. Cl.: B64C 1/06, B64D 13/00

(54) **AIRCRAFT INSULATION SYSTEM AND AIRCRAFT AIR CONDITIONING AND INSULATION ARRANGEMENT**
FLUGZEUGISOLIERUNGSSYSTEM UND FLUGZEUGKLIMATISIERUNGS- UND -ISOLIERUNGSANORDNUNG
SYSTÈME D'ISOLATION D'AÉRONEF, CLIMATISATION D'AÉRONEF ET AGENCEMENT D'ISOLATION

(43) Date of publication of application: 08.02.2017
(73) Proprietor: Airbus Operations GmbH, 21129 Hamburg (DE)
(72) Inventor: Humfeldt, Dirk, 21129 Hamburg (DE)
(74) Representative: Schicker, Silvia

(56) References cited:
- WO-A1-00/37313
- WO-A1-2008/101986
- US-A1- 2009 189 018
- US-A1- 2013 299 630

## Description

The invention relates to an aircraft insulation system. Furthermore, the invention relates to an aircraft air conditioning and insulation arrangement. Finally, the invention relates to a method of operating an aircraft air conditioning and insulation arrangement.

The primary insulation of an aircraft typically comprises mat-like insulation packages that consist of a puffy mineral fiber material and welded cover films. The insulation packages are installed in an overlapping fashion at a suitable distance from an inner surface of the aircraft outer skin so as to from an air gap between the aircraft outer skin and the insulation packages (see e.g. WO2008/101986A1). An inwardly directed cover film of the insulation packages which faces an aircraft cabin is usually permeable to air in order to allow a pressure compensation between air enclosed in the insulation packages and the surroundings and to simultaneously prevent the insulation packages from inflating and shrinking during pressure variations. To the contrary, an outwardly directed cover film of the insulation packages which faces the aircraft outer skin typically is realized in a waterproof fashion so as to form a condensate barrier in order to protect the cabin and moisture sensitive aircraft systems from dripping water.

During flight operation of the aircraft, the aircraft outer skin may have a temperature between -30°C and -55°C. As a result, the location with the dew point temperature of the cabin air typically is located within the insulation packages. Due to pressure variations and diffusion effects, warm and humid cabin air is continuously admitted into the insulation packages through the perforated film facing the cabin. Condensation takes place if this air penetrates into the insulation material up to the location with the dew point temperature. The mineral fibers of the insulation packages absorb drops of the condensate and prevent the drainage thereof. Thus, the insulation packages absorb significant quantities of water, which leads to an increase of their weight and a reduction of their insulation efficiency.

In order to reduce the absorption of water in aircraft primary insulation packages, DE 10 2010 052 671 A1 and US 2013/299630 A1 propose to equip the aircraft primary insulation packages with cover films that are realized in an airtight and waterproof fashion and ventilation openings such that an air exchange with the interior of the insulation packages can only take place through the ventilation openings.

At present, air conditioning systems used in aircraft for ventilating and pressurizing the aircraft cabin work on the principle of mixing ventilation, wherein air, which is temperature-controlled as required, is blown into the aircraft cabin with a high impulse and at a high speed through air inlets usually arranged in the ceiling region of a part of the aircraft to be ventilated. Owing to the high impulse and the high speed of the air blown in, tumble air movements form in the aircraft cabin which ensure a virtually homogeneous intermixing of the air with the ambient air. Free convection induced by heat sources and cold or hot surfaces is dominated by the forced flow of the tumble air movements.

An alternative aircraft air conditioning system which works on the principle of displacement ventilation is described in EP 2 203 348 B1 and US 2010/240290 A1. In this system, air is supplied into an aircraft cabin to be air conditioned via an air inlet located near the floor of the aircraft cabin at a low speed and distributed over the floor area so as to form a conditioned air layer over the entire floor area. The conditioned air then rises at heat sources present in the aircraft cabin due to natural convection and exits the aircraft cabin via an air inlet arranged in a ceiling region of the aircraft cabin. From the air inlet, cabin exhaust air is directed through an exhaust air duct extending along the ceiling region of the aircraft cabin and further into a connecting duct extending along an aircraft outer skin and following, for example, the course of a frame. The connecting duct directs the air discharged from the aircraft cabin to a pressure regulating valve which is located in the region of an aircraft lower shell.

The invention is directed at the object of providing a lightweight, but still effective aircraft insulation system. Furthermore, the invention is directed at the object of providing an arrangement comprising such an aircraft insulation system and an aircraft air conditioning system. Finally, the invention is directed at the object of providing a method of operating an arrangement comprising such an aircraft insulation system and an aircraft air conditioning system.

These objects are achieved with an aircraft insulation system according to claim 1, an aircraft air conditioning and insulation arrangement according to claim 10 and a method of operating an aircraft air conditioning and insulation arrangement according to claim 12.

An aircraft insulation system comprises a foil extending at a distance from an inner surface of an aircraft outer shell. An air gap is defined between the foil and the aircraft outer shell. The air gap is filled with air that is entrapped between the foil and the aircraft outer shell. The air entrapped between the foil and the aircraft outer shell already provides for a thermal insulation of an interior of an aircraft cabin against the aircraft outer shell which during flight operation of the aircraft may be cooled to a temperature of approximately -30°C to -55°C. Preferably, the foil extends substantially parallel to the aircraft outer shell, at least in the region of an upper shell of the aircraft.

A cabin exhaust air duct is arranged adjacent to an inner surface of the foil and is adapted to be flown through with cabin exhaust air. Basically, the cabin exhaust air duct may be defined by a line or pipe. Preferably, however, the cabin exhaust air duct, at least in the region of an upper deck of the aircraft, is defined by a free space existing adjacent to the inner surface of the foil. Warm and humid cabin exhaust air that is discharged from the aircraft cabin via the cabin exhaust air duct thus further insulates the interior of the aircraft cabin against the cold aircraft outer shell. The foil separates the air entrapped between the foil and the aircraft outer shell from the warm and humid cabin exhaust air flowing through the cabin exhaust air duct. As a result, thermal energy losses can be reduced. Further, icing of the inner surface of the aircraft outer shell due to the humidity contained in the cabin exhaust air is prevented.

Since in the aircraft insulation system the thermal insulation function is provided by the layer of entrapped air which is formed between the foil and the aircraft outer shell and the layer of cabin exhaust air flowing through the cabin exhaust air duct, conventional primary insulation packages can be dispensed with. As a result, the aircraft insulation system distinguishes by a particularly low weight per se. In addition, an accumulation of moisture and hence a weight gain as it occurs in prior art insulation systems comprising mineral fiber containing insulation packages can be avoided. The aircraft insulation system thus is particularly advantageous for use in aircraft that are operated in humid conditions which make drying of the insulation packages during ground operation of the aircraft difficult.

Basically, the aircraft insulation system can be employed in any aircraft and in combination with any aircraft air conditioning system. However, a particularly effective insulation of an aircraft passenger cabin, which typically is arranged in an upper shell region of the aircraft, can be achieved, if the cabin exhaust air duct comprises a cabin exhaust air inlet arranged in the ceiling region of the aircraft cabin, since the warm and humid cabin exhaust air then may be directed from a ceiling region of the aircraft upper shell along sidewalls of the aircraft cabin. As a result, the aircraft cabin, along its sidewalls, is effectively insulated from the cold aircraft outer shell.

In an aircraft air conditioning system which works on the principle of displacement ventilation as described in EP 2 203 348 B1 and US 2010/240290 A1, conditioned air is supplied to the aircraft cabin close to the floor of the aircraft cabin and then rises at heat sources present in the aircraft cabin due to natural convection. Cabin exhaust air is discharged from a ceiling region of the aircraft cabin. The aircraft insulation system thus is particularly suitable for use in combination with an aircraft air conditioning system which works on the principle of displacement ventilation as described in EP 2 203 348 B1 and US 2010/240290 A1.

In a preferred embodiment of the aircraft insulation system, the cabin exhaust air duct extends from the ceiling region of the aircraft cabin substantially parallel to the aircraft outer shell into a lower deck of the aircraft. The cabin exhaust air duct then ensures a continuous, effective insulation of the entire aircraft cabin from the cold aircraft outer shell.

At least a part of the cabin exhaust air flowing through the cabin exhaust air duct may be directed into a freight compartment of the aircraft, which typically is arranged in a lower deck region of the aircraft. Furthermore, at least a part of the cabin exhaust air flowing through the cabin exhaust air duct may be directed into a mixer of an aircraft air conditioning system. Within the mixer, the cabin exhaust air may be mixed with cold conditioned air provided by an air conditioning unit of the air conditioning system before being recirculated into the aircraft cabin. Finally, at least a part of the cabin exhaust air flowing through the cabin exhaust air duct may be discharged over board of the aircraft via a pressure regulation valve in order to regulate an aircraft cabin pressure. Water which condenses from the cabin exhaust air stream upon flowing through the cabin exhaust air duct may also be discharged over board of the aircraft via the pressure regulation valve. It is, however, also conceivable to provide a water separator in the cabin exhaust air duct in order to separate condensate from the cabin exhaust air stream.

Upon flowing through the cabin exhaust air duct during flight operation of the aircraft, the cabin exhaust air is cooled due to the transfer of thermal energy from the cabin exhaust air to the cold aircraft outer shell. As a result, the cabin exhaust air can be supplied to a mixer of an air conditioning system as recirculation air already in a precooled state. Consequently, energy consumption of an air conditioning unit of the air conditioning system for providing cold conditioned air can be significantly reduced.

The aircraft insulation system preferably comprises a control unit which is adapted to control a flow of cabin exhaust air through the cabin exhaust air duct in such a manner that the cabin exhaust air, upon flowing through the cabin exhaust air duct, is cooled to a temperature of approximately 5°C to 10°C. For example, the control unit may control a conveying device for conveying the cabin exhaust air through the cabin exhaust air duct in such a manner that the volume flow of cabin exhaust air through the cabin exhaust air duct is suitably adjusted in dependence on the temperature of the aircraft outer shell in order to ensure cooling of the cabin exhaust air upon flowing through the cabin exhaust air duct to the desired temperature of approximately 5°C to 10°C. When the cabin exhaust air, upon flowing through the cabin exhaust air duct, is cooled to a temperature of approximately 5°C to 10°C, the formation of ice due to the condensation of moisture contained in the cabin exhaust air, for example at the inner surface of the foil, can be avoided.

Preferably, the foil is made of a watertight and/or airtight material. A watertight foil prevents condensate formed in the cabin exhaust air duct from entering the air gap defined between the foil and the aircraft outer shell. Hence, icing of the inner surface of the aircraft outer shell can be avoided. An airtight foil prevents an air exchange between the cabin exhaust air duct and the air gap defined between the foil and the aircraft outer shell and hence also prevents moisture contained in the cabin exhaust air flowing through the cabin exhaust air duct from entering the air gap defined between the foil and the aircraft outer shell. For example, the foil may be made of a watertight and airtight plastic material.

Although the use of an airtight foil may be advantageous for preventing moisture from entering the air gap defined between the foil and the aircraft outer shell, the foil should still not form an airtight seal between the cabin exhaust air duct and the aircraft outer shell. Instead, the "barrier" defined by the foil should be permeable to air to such an extent that pressure equalization between the cabin exhaust air duct and the air gap defined between the foil and the aircraft outer shell is possible. This is usually achieved by fastening the foil in a non-sealing manner such that a certain air exchange between the cabin exhaust air duct and the air gap defined between the foil and the aircraft outer shell inevitably occurs even in case the foil itself is made of an airtight material.

Preferably, the foil comprises a plurality of foil sheets. The foil sheets may extend in a circumferential direction of the aircraft outer shell. Preferably, the foil sheets are attached to an aircraft primary structure. For example, the foil sheets may be attached to stringers and/or frames of the aircraft primary structure. In a preferred embodiment, the foil sheets extend in a circumferential direction of the aircraft outer shell between pairs of adjacent frames of the aircraft primary structure.

The foil sheets may be attached to components, in particular the frames of the aircraft primary structure by means of a clamping arrangement. The clamping arrangement may be configured to apply a clamping force in order to clamp the foil sheets to the components, in particular the frames of the aircraft primary structure.

For example, the clamping arrangement may comprise a first and a second clamping element. The first and the second clamping element may be made of a plastic material. Further, the first and the second clamping element may be connected by means of a pin extending through a frame of the aircraft primary structure so as to fasten a first and a second foil sheet to opposing side surfaces of the frame. In particular, each of the first and the second clamping element may have an L-shape cross-section with a first leg and a second leg. The first leg, which may abut against the inner surface of the foil, may press the foil against a surface of a stringer which faces the aircraft cabin. The second leg, which may also abut against the inner surface of the foil, may press the foil against a side surface of the frame.

The clamping arrangement may further comprise a clip extending from the inner surface of the aircraft outer shell adjacent to a side surface of the frame so as to be arranged between the first or the second clamping element and the side surface of the frame. The provision of a clamping arrangement as described above simplifies the installation of the foil sheets in the aircraft.

Preferably, a spacing between adjacent clamping arrangements in a circumferential direction of the aircraft outer shell is twice of the spacing between adjacent stringers of the aircraft primary structure. Deformation and in particular sagging of the foil can thus be prevented.

An aircraft air conditioning and insulation arrangement comprises an air conditioning unit for generating conditioned air and an above-described aircraft insulation system. The air conditioning unit and the cabin exhaust air duct are connected to a mixer adapted to mix the conditioned air generated by the air conditioning unit with at least a part of the cabin exhaust air discharged from the aircraft cabin via the cabin exhaust air duct. As already indicated above, by supplying the mixer with cabin exhaust air which is already precooled due to the transfer of thermal energy to the cold aircraft outer shell upon flowing through the cabin exhaust air duct, the energy consumption of the air conditioning unit can be significantly reduced.

In the aircraft air conditioning and insulation arrangement, the cabin exhaust air duct may be connected to a pressure regulation valve which is adapted to allow the discharge of at least a part of the cabin exhaust air flowing through the cabin exhaust air duct over board of the aircraft in order to regulate an aircraft cabin pressure. For example, the cabin exhaust air duct may comprise two branch ducts, one being connected to the mixer and one being connected to the pressure regulation valve.

In a method of operating an aircraft air conditioning and insulation arrangement, conditioned air is generated by means of an air conditioning unit. Cabin exhaust air is discharged from an aircraft cabin via a cabin exhaust air duct, the cabin exhaust air duct being arranged adjacent to an inner surface of a foil extending at a distance from an inner surface of an aircraft outer shell so as to define an air gap between the foil and the aircraft outer shell. The conditioned air generated by the air conditioning unit is mixed with at least a part of the cabin exhaust air discharged from the aircraft cabin via the cabin exhaust air duct.

Preferably, the cabin exhaust air is discharged from a ceiling region of the aircraft cabin via a cabin exhaust air inlet of the cabin exhaust air duct.

The cabin exhaust air may be directed through the cabin exhaust air duct from the ceiling region of the aircraft cabin substantially parallel to the aircraft outer shell into a lower deck of the aircraft.

At least a part of the cabin exhaust air flowing through the cabin exhaust air duct may be discharged over board of the aircraft via a pressure regulation valve connected to the cabin exhaust air duct in order to regulate an aircraft cabin pressure.

Preferred embodiments of the invention now are described in greater detail with reference to the appended schematic drawings, wherein
- Fig. 1: shows an aircraft air conditioning and insulation arrangement, and
- Fig. 2: shows a detailed view of an aircraft insulation system employed in the aircraft air conditioning and insulation arrangement of figure 1.

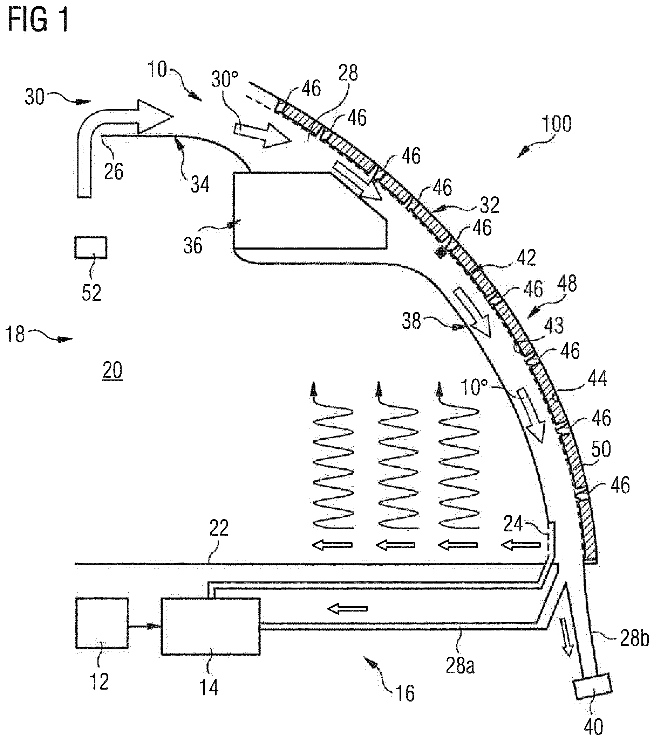

An aircraft air conditioning and insulation arrangement 100 according to Figure 1 comprises an aircraft insulation system 10 and an air conditioning unit 12. The air conditioning unit 12 is operable so as to provide cool conditioned air to a mixer 14. As becomes apparent from Figure 1, the air conditioning unit 12 and the mixer 14 are arranged in the region of a lower deck 16 of the aircraft. The lower deck 16 is separated from an upper deck 18, which accommodates an aircraft cabin 20, for example a passenger cabin, by a floor 22.

The aircraft cabin 20 is air-conditioned by supplying air from the mixer 14 into the aircraft cabin 20 via conditioned air inlets 24 which are formed in sidewalls of the aircraft cabin 20 close to the floor 22. The conditioned air exits the conditioned air inlets 24 at a low speed of approximately 0.1 to 0.5 m/s so as to form a conditioned air layer over the floor area. The conditioned air then rises at heat sources present in the aircraft cabin 20, for example passengers, due to natural convection at a speed of approximately 0.05 m/s and exits the aircraft cabin 20 via a cabin exhaust air outlet 26 of a cabin exhaust air duct 28. The cabin exhaust air outlet 26 is arranged in the region of a ceiling 30 of the aircraft cabin 20. The cabin exhaust air duct 28 extends from the ceiling region of the aircraft cabin 20 in a circumferential direction of an aircraft outer shell 32 into the lower deck 16. In particular, the cabin exhaust air duct 28 extends substantially parallel to the aircraft outer shell 32 between the aircraft outer shell 32 and back walls of interior components such as ceiling panels 34, overhead luggage compartments 36 and sidewall panels 38. Basically, the cabin exhaust air duct 28 may be defined by a line or pipe. Preferably, however, the cabin exhaust air duct 28, in the region of the upper deck 18, is defined by a free space existing between the aircraft outer shell 32 and the back walls of the interior components.

In the region of the lower deck 16, the cabin exhaust air duct 28 comprises a first branch 28a and a second branch 28b. The first branch 28a of the cabin exhaust air duct 28 opens into the mixer 14 so as to supply cabin exhaust air discharged from the aircraft cabin 20 via the cabin exhaust air duct 28 to the mixer 14 as recirculation air. Within the mixer 14, the cabin exhaust air is mixed with the conditioned air generated by the air conditioning unit 12 and finally recirculated into the aircraft cabin 20 via the conditioned air inlets 24. The second branch 28b of the cabin exhaust air duct 28 is connected to a pressure regulation valve 40. Via the pressure regulation valve 40, cabin exhaust air flowing through the cabin exhaust air duct 28 may be discharged over board of the aircraft if needed for regulating an aircraft cabin pressure.

The cabin exhaust air duct 28, which forms a part of the aircraft insulation system 10, at a side facing the aircraft outer shell 32, is delimited by a foil 42. The cabin exhaust air duct 28 thus is arranged adjacent to an inner surface 43 of the foil 42. The foil 42, which is made of an airtight and watertight material, in particular an airtight and watertight plastic material, extends at a distance from an inner surface 44 of the aircraft outer shell 32. In particular, the foil 42 extends substantially parallel to the aircraft outer shell 32, wherein the distance between the inner surface 44 of the aircraft outer shell 32 and the foil 42 substantially corresponds to the extension of stringers 46, which form components of the aircraft primary structure 48, from the inner surface 44 of the aircraft outer shell 32 in a radial direction.

An air gap 50 is defined between the foil 42 and the aircraft outer shell 32. The air gap 50 is filled with air that is entrapped between the foil 42 and the aircraft outer shell 32. The air entrapped between the foil 42 and the aircraft outer shell 32 already provides for a thermal insulation of an interior of the aircraft cabin 20 against the aircraft outer shell 32 which during flight operation of the aircraft may be cooled to a temperature of approximately -30°C to -55°C. A further insulation layer, which effectively insulates the aircraft cabin 20 against the cold aircraft outer shell 32, is formed by the warm and humid cabin exhaust air that is discharged from the aircraft cabin via the cabin exhaust air duct 28.

As a result, in the aircraft insulation system 10, conventional primary insulation packages can be dispensed with. Due to the presence of the foil 42, the air entrapped between the foil 42 and the aircraft outer shell 32 is separated from the warm and humid cabin exhaust air flowing through the cabin exhaust air duct 28 and hence, thermal energy losses can be reduced. Furthermore, icing of the inner surface 44 of the aircraft outer shell 32 due to the humidity contained in the cabin exhaust air is prevented.

As indicated in Figure 1, upon flowing through the cabin exhaust air duct 28, the cabin exhaust air, due to the transfer of thermal energy to the cold aircraft outer shell 32, is cooled from a temperature of approximately 30°C in the region of the cabin exhaust air outlet 26 to approximately 10°C in the region of the floor 22. Specifically, a flow of cabin exhaust air through the cabin exhaust air duct, by means of a control unit 52, is controlled in such a manner that the cabin exhaust air, upon flowing through the cabin exhaust air duct, is cooled to a temperature of approximately 5°C to 10°C. For example, the control unit 52 may control a conveying device (not shown) for conveying the cabin exhaust air through the cabin exhaust air duct 28 in such a manner that the volume flow of cabin exhaust air through the cabin exhaust air duct 28 is suitably adjusted in dependence on the temperature of the aircraft outer shell 32 in order to ensure cooling of the cabin exhaust air upon flowing through the cabin exhaust air duct 28 to the desired temperature of approximately 5°C to 10°C.

Due to being precooled upon flowing through the cabin exhaust air duct 28, the cabin exhaust air enters the mixer 14 at a temperature that is significantly lower than the temperature at the cabin exhaust air in the region of the cabin exhaust air outlet 28. As a result, energy consumption of the air conditioning unit 12 for providing cold conditioned air to be mixed with the cabin exhaust air can be reduced. In addition, when the cabin exhaust air, upon flowing through the cabin exhaust air duct, by means of the control unit 52, is cooled to a temperature of approximately 5°C to 10°C, the formation of ice due to the condensation of moisture contained in the cabin exhaust air, for example at the inner surface of the foil 42, can be avoided.

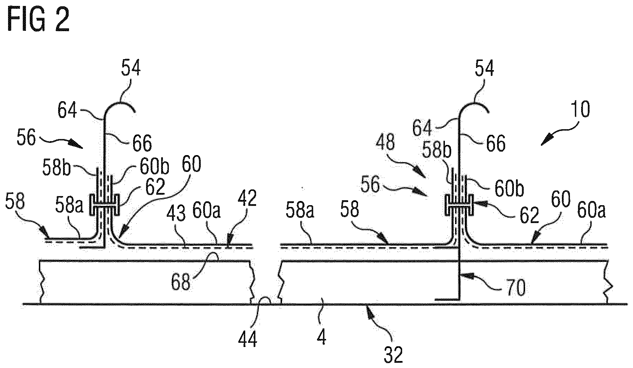

As becomes apparent from Figure 2, the foil 42 comprises a plurality of foil sheets 42a, 42b, 42c that are attached to the aircraft primary structure 48. In particular, the individual foil sheets 42a, 42b, 42c extend in a circumferential direction along of the aircraft outer shell 32 between pairs of adjacent frames 54 of the aircraft primary structure 48. The foil sheets 42a, 42b, 42c are attached to the frames 54 by means of clamping arrangements 56.

Each clamping arrangement 56 comprises a first and a second clamping element 58, 60 which are connected to each other by means of a pin 62 extending through one of the frames 54, while clamping edges of two adjacent foil sheets 42a, 42b, 42c therebetween against opposing side surfaces 64, 66 of the frame 54. The foil sheets 42a, 42b, 42c thus are fastened to the opposing side surfaces 64, 66 of the frame 54. Each of the first and the second clamping element 58, 60 is made of a plastic material and has an L-shape cross-section with a first leg 58a, 60a and a second leg 58b, 60b. The first leg 58a, 60a, which abuts against the inner surface 43 of the foil 42, presses the foil 42 against a surface 68 of a stringer 46 which faces the aircraft cabin 20. The second leg 58b, 60b, which also abuts against the inner surface 43 of the foil 42, presses the foil 42 against a side surface 64, 66 of the frame 54. The clamping arrangement 56 further comprises a clip 70 extending from the inner surface 44 of the aircraft outer shell 32 adjacent to a side surface 64 of the frame 54 so as to be arranged between the first clamping element 58 and the side surface 64 of the frame 54.

A spacing between adjacent clamping arrangements 56 in a circumferential direction of the aircraft outer shell 32 is twice of the spacing between adjacent stringers 46 of the aircraft primary structure 48. Deformation and in particular sagging of the foil 42 can thus be prevented.

If the foil 42 is attached in a non-sealing manner, for example as described above, a certain air exchange between the cabin exhaust air duct 28 and the air gap 50 defined between the foil 42 and the aircraft outer shell 32 inevitably occurs even in case the foil 42 itself is made of an airtight material. Hence, the "barrier" defined by the foil 42 is permeable to air to such an extent that a desired pressure equalization between the cabin exhaust air duct 28 and the air gap 50 defined between the foil 42 and the aircraft outer shell 32 is possible.

## Claims

1. An aircraft insulation system (10) comprising:
- a foil (42) extending at a distance from an inner surface (44) of an aircraft outer shell (32),
- a cabin exhaust air duct (28) arranged adjacent to an inner surface (43) of the foil (42) and being adapted to be flown through with cabin exhaust air,
**characterised by** an air gap (50) defined between the foil (42) and the aircraft outer shell (32).

2. The aircraft insulation system according to claim 1,
wherein the cabin exhaust air duct (28) comprises a cabin exhaust air outlet (24) arranged in a ceiling region of an aircraft cabin (20) and/or wherein the cabin exhaust air duct (28) extends from the ceiling region of the aircraft cabin (20) substantially parallel to the aircraft outer shell (32) into a lower deck of the aircraft.

3. The aircraft insulation system according to claim 1 or 2,
further comprising a control unit (52) which is adapted to control a flow of cabin exhaust air through the cabin exhaust air duct (28) in such a manner that the cabin exhaust air, upon flowing through the cabin exhaust air duct (28), is cooled to a temperature of approximately 5°C to 10°C.

4. The aircraft insulation system according to anyone of claims 1 to 3,
wherein the foil (42) is made of a watertight and/or airtight material.

5. The aircraft insulation system according to anyone of claims 1 to 4,
wherein the foil (42) comprises a plurality of foil sheets (42a, 42b, 42c) attached to an aircraft primary structure (48), the foil sheets (42a, 42b, 42c) extending between pairs of adjacent frames (54) of the aircraft primary structure (48).

6. The aircraft insulation system according to claim 5,
wherein the foil sheets (42a, 42b, 42c) are attached to the frames (54) of the aircraft primary structure (48) by means of a clamping arrangement (56).

7. The aircraft insulation system according to claim 6,
wherein the clamping arrangement (56) comprises a first and a second clamping element (58, 60) which are connected by means of a pin (62) extending through a frame (54) of the aircraft primary structure (48) so as to fasten a first and a second foil sheet (42a, 42b, 42c) to opposing side surfaces (64, 66) of the frame (54).

8. The aircraft insulation system according to claim 6 or 7,
wherein the clamping arrangement (56) further comprises a clip (70) extending from the inner surface (44) of the aircraft outer shell (32) adjacent to a side surface (64, 66) of the frame (54) so as to be arranged between the first or the second clamping element (58, 60) and the side surface (64, 66) of the frame (54).

9. The aircraft insulation system according to anyone of claims 6 to 8,
wherein a spacing between adjacent clamping arrangements (56) in a circumferential direction of the aircraft outer shell (32) is twice of the spacing between adjacent stringers (46) of the aircraft primary structure (48).

10. An aircraft air conditioning and insulation arrangement (100) comprising:
- an air conditioning unit (12) for generating conditioned air, and
- an aircraft insulation system (10) according to anyone of claims 1 to 9, wherein the air conditioning unit (12) and the cabin exhaust air duct (28) are connected to a mixer (14) adapted to mix the conditioned air generated by the air conditioning unit (14) with at least a part of the cabin exhaust air discharged from an aircraft cabin (20) via the cabin exhaust air duct (28).

11. The aircraft air conditioning and insulation arrangement (100) according to claim 10,
wherein the cabin exhaust air duct (28) is connected to a pressure regulation valve (40) which is adapted to allow the discharge of at least a part of the cabin exhaust air flowing through the cabin exhaust air duct (28) over board of the aircraft in order to regulate an aircraft cabin pressure.

12. A method of operating an aircraft air conditioning and insulation arrangement (100) comprising:
- generating conditioned air by means of an air conditioning unit (12),
- discharging cabin exhaust air from an aircraft cabin (20) via a cabin exhaust air duct (28), the cabin exhaust air duct (28) being arranged adjacent to an inner surface (43) of a foil (42) extending at a distance from an inner surface (44) of an aircraft outer shell (32) so as to define an air gap (50) between the foil (42) and the aircraft outer shell (32), and
- mixing the conditioned air generated by the air conditioning unit (12) with at least a part of the cabin exhaust air discharged from the aircraft cabin (20) via the cabin exhaust air duct (28).

13. The method according to claim 12,
wherein the cabin exhaust air is discharged from a ceiling region the aircraft cabin (20) via a cabin exhaust air outlet (26) of the cabin exhaust air duct (28).

14. The method according to claims 12 or 13,
wherein the cabin exhaust air is directed through the cabin exhaust air duct (28) from the ceiling region of the aircraft cabin (20) substantially parallel to the aircraft outer shell (32) into a lower deck of the aircraft.

15. The method according to anyone of claims 12 to 14,
wherein at least a part of the cabin exhaust air flowing through the cabin exhaust air duct (28) is discharged over board of the aircraft via a pressure regulation valve (40) connected to the cabin exhaust air duct (28) in order to regulate an aircraft cabin pressure.

## Patentansprüche

1. Flugzeugisolierungssystem (10), umfassend:
- eine Folie (42), die sich in einem Abstand von einer Innenfläche (44) einer Flugzeugaußenhaut (32) erstreckt,
- einen Kabinenabluftkanal (28), der angrenzend an eine Innenfläche (43) der Folie (42) angeordnet und geeignet ist, von Kabinenabluft durchströmt zu werden,
**gekennzeichnet durch** einen Luftspalt (50), der zwischen der Folie (42) und der Flugzeugaußenhaut (32) definiert ist.

2. Flugzeugisolierungssystem nach Anspruch 1,
wobei die Kabinenabluft (28) einen Kabinenabluftauslass (24) umfasst, der in einem Deckenbereich einer Flugzeugkabine (20) angeordnet ist, und/oder wobei sich der Kabinenabluftkanal (28) von dem Deckenbereich der Flugzeugkabine (20) im Wesentlichen parallel zu der Flugzeugaußenhaut (32) in ein unteres Deck des Flugzeugs erstreckt.

3. Flugzeugisolierungssystem nach Anspruch 1 oder 2,
ferner umfassend eine Steuereinheit (52), die geeignet ist, einen Strom von Kabinenabluft durch den Kabinenabluftkanal (28) auf eine solche Weise zu steuern, dass die Kabinenabluft beim Strömen durch den Kabinenabluftkanal (28) auf eine Temperatur von ca. 5 °C bis 10 °C abgekühlt wird.

4. Flugzeugisolierungssystem nach einem der Ansprüche 1 bis 3,
wobei die Folie (42) aus einem wasserdichten und/oder luftdichten Material hergestellt ist.

5. Flugzeugisolierungssystem nach einem der Ansprüche 1 bis 4,
wobei die Folie (42) eine Mehrzahl von Folienbahnen (42a, 42b, 42c) umfasst, die an einer Flugzeugprimärstruktur (48) angebracht sind, wobei sich die Folienbahnen (42a, 42b, 42c) zwischen Paaren von angrenzenden Rahmen (54) der Flugzeugprimärstruktur (48) erstrecken.

6. Flugzeugisolierungssystem nach Anspruch 5,
wobei die Folienbahnen (42a, 42b, 42c) mittels einer Klemmanordnung (56) an den Rahmen (54) der Flugzeugprimärstruktur (48) angebracht sind.

7. Flugzeugisolierungssystem nach Anspruch 6,
wobei die Klemmanordnung (56) ein erstes und ein zweiten Klemmelement (58, 60) umfasst, die mittels eines Stiftes (62), der sich durch einen Rahmen (54) der Flugzeugprimärstruktur (48) erstreckt, verbunden sind, um eine erste und eine zweite Folienbahn (42a, 42b, 42c) an sich gegenüberliegenden Seitenflächen (64, 66) des Rahmens (54) zu befestigen.

8. Flugzeugisolierungssystem nach Anspruch 6 oder 7,
wobei die Klemmanordnung (56) ferner eine Klammer (70) umfasst, die sich von der Innenfläche (44) der Flugzeugaußenhaut (32) angrenzend an eine Seitenfläche (64, 66) des Rahmens (54) erstreckt, um zwischen dem ersten oder dem zweiten Klemmelement (58, 60) und der Seitenfläche (64, 66) des Rahmens (54) angeordnet zu sein.

9. Flugzeugisolierungssystem nach einem der Ansprüche 6 bis 8,
wobei ein Abstand zwischen aneinander angrenzenden Klemmanordnungen (56) in einer Umfangsrichtung der Flugzeugaußenhaut (32) doppelt so groß wie der Abstand zwischen aneinander angrenzenden Längsversteifungen (46) der Flugzeugprimärstruktur (48) ist.

10. Flugzeugklimatisierungs- und isolierungsanordnung (100), umfassend:
- ein Klimagerät (12) zum Erzeugen von klimatisierter Luft und
- ein Flugzeugisolierungssystem (10) nach einem der Ansprüche 1 bis 9, wobei das Klimagerät (12) und der Kabinenabluftkanal (28) mit einer Mischvorrichtung (14) verbunden sind, die geeignet ist, die von dem Klimagerät (14) erzeugte klimatisierte Luft mit wenigstens einem Teil der Kabinenabluft zu mischen, die über den Kabinenabluftkanal (28) aus einer Flugzeugkabine (20) abgeführt wird.

11. Flugzeugklimatisierungs- und isolierungsanordnung (100) nach Anspruch 10, wobei der Kabinenabluftkanal (28) mit einem Druckregelventil (40) verbunden ist, das geeignet ist, das Abführen wenigstens eines Teils der durch den Kabinenabluftkanal (28) strömenden Kabinenabluft aus dem Flugzeug zu ermöglichen, um einen Flugzeugkabinendruck zu regeln.

12. Verfahren zum Betrieb einer Flugzeugklimatisierungs- und isolierungsanordnung (100), umfassend:
- Erzeugen von klimatisierter Luft mittels eines Klimageräts (12),
- Abführen von Kabinenabluft aus einer Flugzeugkabine (20) über einen Kabinenabluftkanal (28), wobei der Kabinenabluftkanal (28) angrenzend an eine Innenfläche (43) einer Folie (42), die sich in einem Abstand von einer Innenfläche (44) einer Flugzeugaußenhaut (32) erstreckt, angeordnet ist, um einen Luftspalt (50) zwischen der Folie (42) und der Flugzeugaußenhaut (32) zu definieren, und
- Mischen der von dem Klimagerät (12) erzeugten klimatisierten Luft mit wenigstens einem Teil der über den Kabinenabluftkanal (28) aus der Flugzeugkabine (20) abgeführten Kabinenabluft.

13. Verfahren nach Anspruch 12,
wobei die Kabinenabluft über einen Kabinenabluftauslass (26) des Kabinenabluftkanals (28) aus einem Deckenbereich der Flugzeugkabine (20) abgeführt wird.

14. Verfahren nach Anspruch 12 oder 13,
wobei die Kabinenabluft durch den Kabinenabluftkanal (28) von dem Deckenbereich der Flugzeugkabine (20) im Wesentlichen parallel zu der Flugzeugaußenhaut (32) in ein unteres Deck des Flugzeugs geleitet wird.

15. Verfahren nach einem der Ansprüche 12 bis 14,
wobei wenigstens ein Teil der durch den Kabinenabluftkanal (28) strömenden Kabinenabluft über ein Druckregelventil (40), das mit dem Kabinenabluftkanal (28) verbunden ist, aus dem Flugzeug abgeführt wird, um einen Flugzeugkabinendruck zu regeln.

## Revendications

1. Système d'isolation d'aéronef (10) comprenant :
- une tôle (42) s'étendant à une distance d'une surface intérieure (44) d'une coque extérieure (32) de l'aéronef,
- un conduit d'évacuation d'air de cabine (28) agencé de manière adjacente à une surface intérieure (43) de la tôle (42) et adapté pour être traversé par de l'air d'évacuation de cabine,
**caractérisé par** un espace d'air (50) défini entre la tôle (42) et la coque extérieure de l'aéronef (32).

2. Système d'isolation d'aéronef selon la revendication 1,
le conduit d'évacuation d'air de cabine (28) comprenant une sortie d'évacuation d'air de cabine (24) agencée dans une zone de plafond d'une cabine de l'aéronef (20) et/ou le conduit d'évacuation d'air de cabine (28) s'étendant depuis la zone de plafond de la cabine de l'aéronef (20) sensiblement parallèle à la coque extérieure de l'aéronef (32) vers un pont inférieur de l'aéronef.

3. Système d'isolation d'aéronef selon la revendication 1 ou 2,
comprenant en outre une unité de commande (52) qui est adaptée pour commander un écoulement d'air d'évacuation de cabine à travers le conduit d'évacuation d'air de cabine (28) de telle sorte que l'air d'évacuation de cabine, lors de son passage à travers le conduit d'évacuation d'air de cabine (28), est refroidi à une température d'approximativement 5°C à 10°C.

4. Système d'isolation d'aéronef selon l'une quelconque des revendications 1 à 3, la tôle (42) étant constituée d'un matériau étanche à l'eau et/ou à l'air.

5. Système d'isolation d'aéronef selon l'une quelconque des revendications 1 à 4, la tôle (42) comprenant une pluralité de feuilles de tôle (42a, 42b, 42c) fixées à une structure primaire de l'aéronef (48), les feuilles de tôle (42a, 42b, 42c) s'étendant entre des paires de cadres adjacents (54) de la structure primaire de l'aéronef (48).

6. Système d'isolation d'aéronef selon la revendication 5,
les feuilles de tôle (42a, 42b, 42c) étant fixées aux cadres (54) de la structure primaire de l'aéronef (48) au moyen d'un agencement de serrage (56).

7. Système d'isolation d'aéronef selon la revendication 6,
l'agencement de serrage (56) comprenant un premier et un second élément de serrage (58, 60) qui sont reliés au moyen d'une broche (62) s'étendant à travers un cadre (54) de la structure primaire de l'aéronef (48) de manière à fixer une première et une seconde feuille de tôle (42a, 42b, 42c) aux surfaces latérales opposées (64, 66) du cadre (54).

8. Système d'isolation d'aéronef selon la revendication 6 ou 7,
l'agencement de serrage (56) comprenant en outre un clip (70) s'étendant depuis la surface intérieure (44) de la coque extérieure de l'aéronef (32) adjacente à une surface latérale (64, 66) du cadre (54) de manière à être agencé entre le premier ou le second élément de serrage (58, 60) et la surface latérale (64, 66) du cadre (54).

9. Système d'isolation d'aéronef selon l'une quelconque des revendications 6 à 8, un espacement entre des agencements de serrage adjacents (56) dans une direction circonférentielle de la coque extérieure de l'aéronef (32) étant le double de l'espacement entre des longerons adjacents (46) de la structure primaire de l'aéronef (48).

10. Agencement de climatisation et d'isolation d'aéronef (100) comprenant :
- une unité de climatisation (12) pour produire de l'air conditionné, et
- un système d'isolation de l'aéronef (10) selon l'une quelconque des revendications 1 à 9, l'unité de climatisation (12) et le conduit d'évacuation d'air de cabine (28) étant reliés à un mélangeur (14) adapté pour mélanger l'air conditionné généré par l'unité de climatisation (14) avec au moins une partie de l'air évacué d'une cabine de l'aéronef (20) via le conduit d'évacuation d'air de cabine (28).

11. Agencement de climatisation et d'isolation d'aéronef (100) selon la revendication 10,
le conduit d'évacuation d'air de cabine (28) étant relié à une soupape de régulation de pression (40) qui est adaptée pour permettre l'évacuation d'au moins une partie de l'air d'évacuation de cabine s'écoulant à travers le conduit d'évacuation d'air de cabine (28) au-dessus de l'aéronef afin de réguler une pression de cabine de l'aéronef.

12. Procédé de fonctionnement d'un agencement de climatisation et d'isolation d'aéronef (100) comprenant :
- la production d'air conditionné au moyen d'une unité de climatisation (12),
- l'évacuation de l'air d'évacuation de cabine d'une cabine de l'aéronef (20) via un conduit d'évacuation d'air de cabine (28), le conduit d'évacuation d'air de cabine (28) étant agencé de manière adjacente à une surface intérieure (43) d'une tôle (42) s'étendant à une distance depuis une surface intérieure (44) d'une coque extérieure de l'aéronef (32) afin de définir un espace d'air (50) entre la tôle (42) et la coque extérieure de l'aéronef (32), et
- le mélange de l'air conditionné généré par l'unité de climatisation (12) avec au moins une partie de l'air évacué de la cabine de l'aéronef (20) via le conduit d'évacuation d'air de cabine (28).

13. Procédé selon la revendication 12,
l'air d'évacuation de cabine étant évacué d'une zone de plafond de la cabine (20) de l'aéronef via une sortie d'air d'évacuation de cabine (26) du conduit d'évacuation d'air de cabine (28).

14. Procédé selon les revendications 12 ou 13,
l'air d'évacuation de la cabine étant dirigé à travers le conduit d'évacuation d'air de cabine (28) depuis la zone de plafond de la cabine (20) de l'aéronef sensiblement parallèle à la coque extérieure de l'aéronef (32) dans un pont inférieur de l'aéronef.

15. Procédé selon l'une quelconque des revendications 12 à 14,
au moins une partie de l'air d'évacuation de cabine qui s'écoule à travers le conduit d'évacuation d'air de cabine (28) étant évacuée au-dessus de l'aéronef via une soupape de régulation de pression (40) reliée au conduit d'évacuation d'air de cabine (28) afin de réguler une pression de cabine de l'aéronef.
